# FASCICULE DE BREVET EUROPEEN

(11) **EP 2 207 130 B1**
(45) Date de publication et mention de la délivrance du brevet: **14.11.2012**
(21) Numéro de dépôt: 10150199.7
(22) Date de dépôt: 07.01.2010
(51) Int. Cl.: G06K 19/02, G06K 19/04, G06K 19/07, G06K 19/077, G09F 3/02, G09F 3/04

(54) **Plaquette d'identification des bois avec traçabilité par RFID-UHF**
Kennschild für Holz mit Rückverfolgbarkeit durch RFID-UHF-Technik
Wood identification plate with traceability by RFID-UHF

(30) Priorité: 09.01.2009 FR 0900112
(43) Date de publication de la demande: 14.07.2010
(73) Titulaire: Leuvrey, Bernard Abel André, 70290 Raddon (FR)
(72) Inventeur: Leuvrey, Bernard Abel André, 70290 Raddon (FR)
(74) Mandataire: Brungard, Yves Francois

(56) Documents cités:
- EP-A- 1 246 152
- WO-A-2006/074518
- FR-A- 2 913 134

## Description

L'invention concerne l'identification des bois, arbres, billons, sciages, palettes, et autres dérivés du bois, et ses moyens tels que principalement les plaquettes d'identification fixées sur bois.

Les brevets LEUVREY N°FR 9101877 (Publication 2 673 026), N°FR 9705802 (Publication 2763164), N°FR 0007882 (Publication 2810436), N°FR 0115338 (Publication 2 832 841), et N°FR 0701509 (Publication 2913134) abordent déjà la question de l'identification des bois par plaquette fixée dans le bois et comprenant un élément d'identification tel qu'une RFID (radio fréquence identification), ou encore telles que des étiquettes-radio posées dans différentes façons.

Dans une application de traçabilité du bois, ce dernier brevet FR 0701509 introduit l'emploi de RFID de type glasstag en basse fréquence (glasstag = RFID avec antenne enfermée dans une capsule de verre, application courante dans la traçabilité des animaux) ; de plus, la problématique d'une RFID non-extractable de son support et non-substituable n'est pas traitée, question fondamentale exigée dans certaines lignes à traçabilité optimum ; au contraire, le document expose des techniques de fixation de RFID qui peuvent s'enlever de leur plaquette.

Le brevet EP 1 246 152 A1 LATSCHBACHER reprend la plupart des solutions déjà apportées dans les brevets antérieurs Leuvrey cités plus haut, en particulier dans les différentes positions d'une étiquette-radio rapportée à une plaquette d'identification des billons de bois, ainsi que dans le brevet LEUVREY N°FR 8701700 du 11 02 1987 (Publication 2610749).

Ces techniques décrites dans ces précédents brevets cités concernent une identification placée à plat sur ou sous une plaquette plaquée contre le bois, cette identification étant directement exposée aux chocs, et à tous risques divers et réels de dégradations.

Ces techniques n'abordent pas ni ne valident pas explicitement la possibilité d'utiliser un transpondeur, ni une étiquette-radio en fréquence UHF, ni une quelconque RFID-UHF, qui dans ce cas seraient onc exposées aux chocs et donc détruites comme par marteau sur son enclume.

Divers autres brevets impliquent l'emploi de RFID, mais sans préciser les buts et moyens recherchés adéquats pour utiliser une RFID-UHF (radio-fréquence identification / ultra haute fréquence) dans le domaine du bois.

Or dans le domaine de la traçabilité des bois, les RFID et plus particulièrement les RFID de type UHF demandent des solutions nouvelles de protection particulièrement adaptées et nécessaires à leur bon fonctionnement, précisément décrites dans la présente invention.

Les techniques concernant la RFID, ainsi que les normes de gestion des circuits de traçabilité et des contrôles par RFID, demandent en effet maintenant plus particulièrement l'emploi des RFID de type UHF, parce que cette dernière en UHF a la qualité de se lire à une distance plus grande que les RFID de type LF (basse fréquence, comme par exemple le glasstag) ou HF (haute fréquence), ceci dans de nombreux domaines d'applications; le domaine du bois n'échappe pas à cette possibilité.

Lire à distance confortable est une qualité requise et recherchée par de nombreux opérateurs, dans leurs tâches quotidiennes ; cette distance suffisante est également nécessaire pour fonctionner dans des dispositifs intégrant des lecteurs à poste fixe à distance comme des bornes ou portiques de lectures à proximité desquels passent les camions par exemple, les données étant alors enregistrées automatiquement dans un dispositif central informatique et logistique.

La traçabilité par RFID-UHF (radio-fréquence identification / ultra haute fréquence) aura donc tendance à se généraliser aussi dans le domaine du bois, depuis l'arbre de la forêt jusqu'à la scierie et autres opérations de transformation du bois. L'arbre a une importance stratégiquement très importante, en regard du fait qu'il est une rare grande ressource renouvelable sur la planète, et qu'il est un puits de C02, autre éco-problème majeur. Aussi s'impose une traçabilité du bois sûre, exigeante et pratique, par l'emploi de RFID-UHF.

Se pose alors la question d'une plaquette de marquage des bois avec une RFID de type UHF qui soit opérationnelle en permanence.

Mais cette dernière exigence de permanence de lecture de la RFID-UHF est donc ici-même au coeur de la problématique d'une nouvelle plaquette d'identification avec une RFID-UHF, spécialement conçue en identification des bois.

Les fréquences UHF sont sensiblement voisines ou identiques à celles des matériaux tels que l'eau, le métal ; de ce fait de la confusion et brouillage de ces fréquences étrangères émises en un même point, l'emploi d'une RFID-UHF sur ces matériaux occasionne des incidents de lecture, les RFID-UHF n'étant pas reconnues, avec conséquence d'une rupture dans le processus de traçabilité.

Or les bois bruts, tels que arbres, billons, sont en effet composés majoritairement d'eau dont les fréquences sont voisines des fréquences des RFID de type UHF, ce qui empêche le lecteur adapté de reconnaître la RFID-UHF et donc le numéro de traçabilité de l'objet ou pièce visés, arbres, billons, débits de bois, produits dérivés.

Ce problème étant aggravé par des bois composés de beaucoup d'eau, surtout s'ils ont été particulièrement en contact de l'eau dans leurs diverses utilisations, comme par exemple des palettes de manutention stockées sur parcs extérieurs ou encore des billons de bois en flottage sur cours d'eau ou bassins.

Il est donc impératif que la plaquette doit maintenir sa RFID-UHF à une distance d'éloignement suffisante du matériau bois pour éviter des perturbations et incidents de lecture et donc pour la lire correctement au moyen d'un lecteur adapté. La question économique des coûts recherchés les plus bas implique aussi l'emploi généralement de RFID de type UHF incrustées (inlay) sur des étiquettes adhésives, car fabriquées en production de masse, ainsi que des moyens techniquement élaborés et nouveaux pour produire et obtenir une plaquette d'identification et de traçabilité des bois avec une RFID-UHF maintenue opérationnelle et donc lisible en permanence.

Marquer un billon de bois demande un élément technique adapté appelé plaquette qui se pose directement dans le bois sans clou, au moyen de ses pattes rigides qui résistent à l'enfoncement dans les bois durs.

Intégrer une RFID-UHF dedans, contre dessus ou dessous la plaquette commune, donc contre très près du matériau bois, s'oppose alors à 2 inconvénients :

L'un est que la RFID-UHF sera trop près du bois et donc des défauts de lecture par brouillage et confusion des fréquences sont certains ;

L'autre est que la puce et son antenne composant la RFID sont souvent intégrées sur un support adhésif telle qu'étiquette ou encore enrésinées ; cette RFID est donc très fragile et ne supporterait pas les agressions telles que gel, eau, projections de boue, chocs divers rencontrés aux opérations d'abattage, de débardage, de transports des bois, et autres manipulations diverses sur chantiers.

Dans le but recherché, par une plaquette nouvelle, de disposer d'une solution RFID-UHF (radio-fréquence identification / ultra haute fréquence) dans la traçabilité des bois, avec permanence opérationnelle de sa lecture,

La présente invention apporte des solutions techniques nouvelles au profit d'une RFID-UHF par
* sa mise à distance suffisante du bois
* sa tenue et protection aux chocs, aux intempéries, et en extérieur par tous les temps
* son intégrité, sa non-extraction de la plaquette et sa non-interchangeabilité (non-substituabilité) garanties.

L'invention sera mieux comprise à la lecture des dessins ci-dessous :

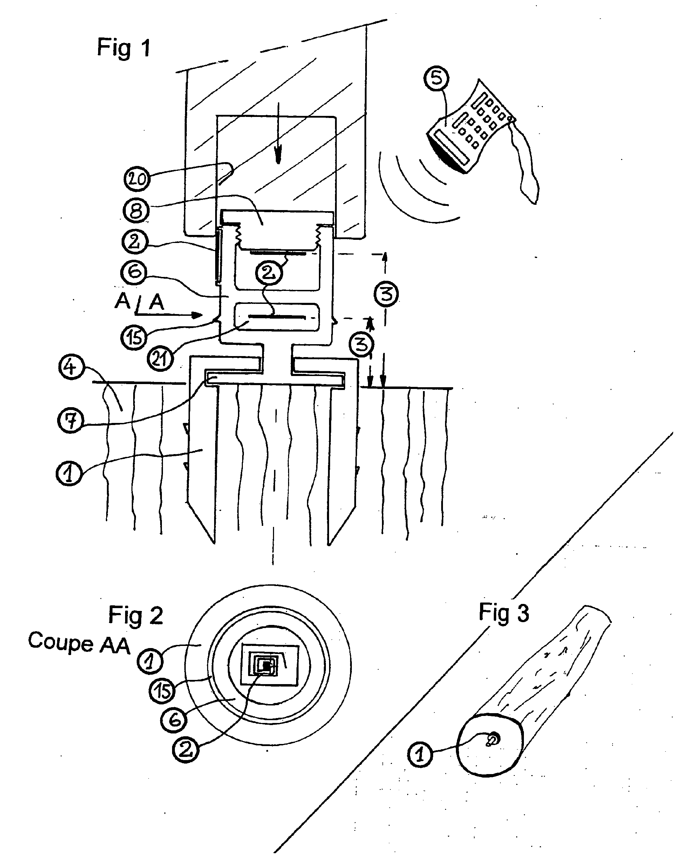

FIG 1 représente une vue en coupe axiale de la plaquette fixée sur un billon de bois
FIG 2 représente une coupe AA de la partie extérieure de la plaquette selon la FIG 1
FIG 3 représente une plaquette en situation opérationnelle sur un billon de bois

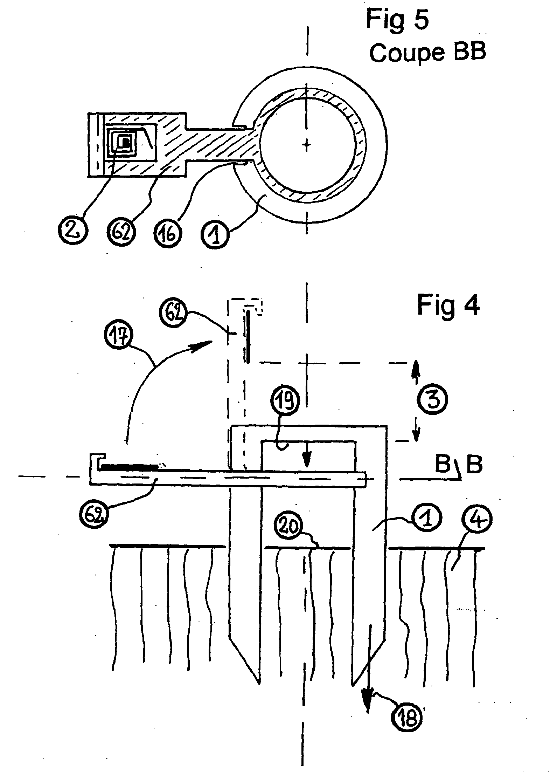

FIG 4 représente, dans une 1ère variante de réalisation, une coupe axiale de la plaquette
FIG 5 représente une coupe BB de la plaquette selon la FIG 4

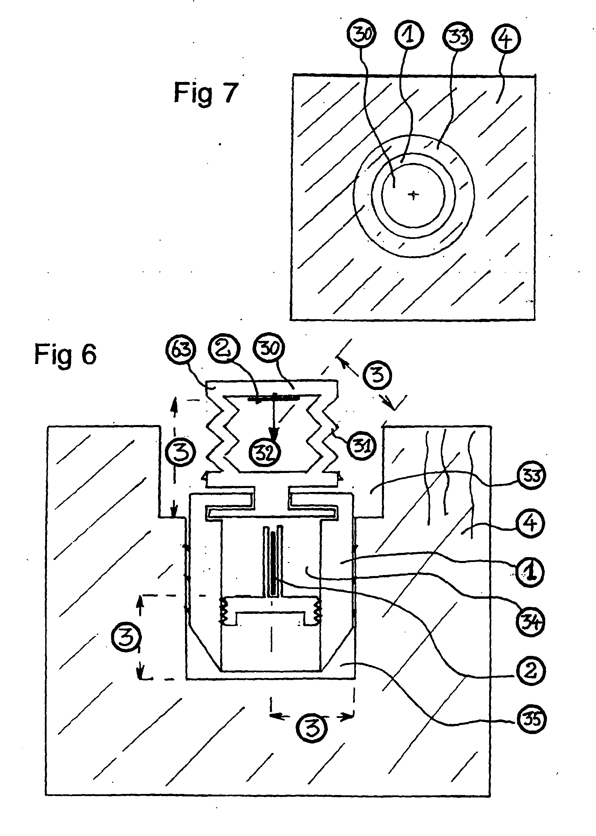

FIG 6 représente, dans une 2^{ème} variante de réalisation, une coupe axiale de la plaquette avec soufflet fixée dans un dé de palette.
FIG 7 représente une vue de haut de la plaquette fixée sur le dé de palette selon la FIG 6

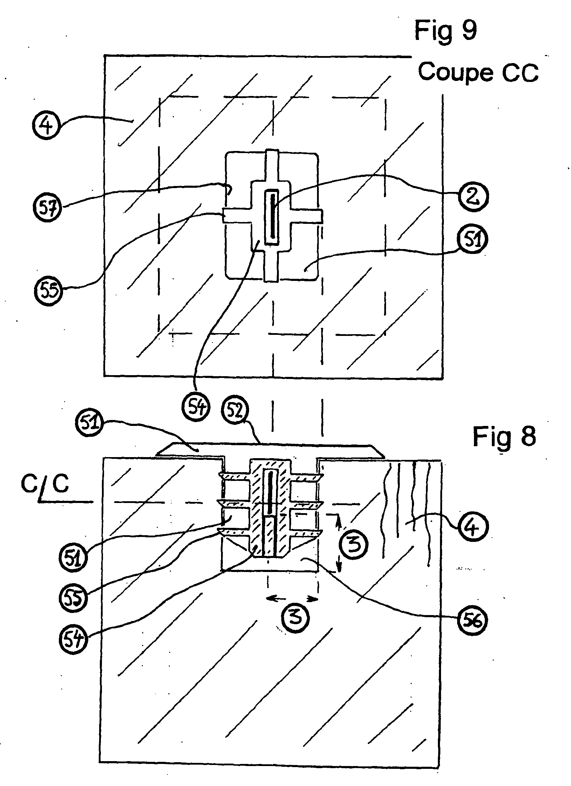

FIG 8 représente, dans une 3ème variante, une coupe axiale d'une plaquette sur dé de palette
FIG 9 représente une coupe CC transversale de la plaquette selon la FIG 8

La plaquette selon l'invention comprend une partie inférieure 1 en matière plastique et rigide non déformable destinée à être positionnée par fixation directement dans les bois durs. La plaquette comprend un support extérieur 6 destiné à maintenir en son intérieur fermé définitivement une RFID-UHF ; ce support 6 est réalisé en matière plastique semi-souple afin d'amortir et protéger la RFID-UHF face aux chocs lors des suivis et manipulations des bois, par exemple pendant les opérations de débardage, de transport, et diverses manipulations sur chantiers et en scieries, ou encore, autre exemple, face à des chocs intempestifs du bâton de promeneurs prédateurs s'amusant à taper une plaquette posée sur un arbre pour une gestion longue durée. Le support 6 reste en permanence à la verticale du bois, dans une hauteur donnant une position de mise à distance 3 de la RFID-UHF la plus éloignée du bois et suffisante pour autoriser la lecture de la RFID-UHF par un lecteur adapté 5, ledit lecteur n'étant pas perturbé par des fréquences proches du matériau bois 4 ; dans ce but, le matériau qui compose le support 6 doit bien amortir les chocs et y résister, se plier et esquiver les chocs ; à cet effet, il est semi-souple et aussi semi-rigide pour revenir et rester à sa position nominale et verticale de mise à distance 3 de lecture de la masse du bois 4 ; ces deux qualités de la matière plastique qui compose le support extérieur 6, soit semi-souple et semi- rigide associées, seront ici nommées « à mémoire élastique ». La matière du support 6 pourra être également transparente, ceci afin de reconnaître les signes visible du numéro de la RFID, reconnaissable malgré un éventuel dysfonctionnement de lecture directe par le lecteur.

Cette plaquette avec RFID-UHF ne peut être réalisée en une seule pièce composée d'une seule matière ; rigide dans son ensemble, le support 6 pourrait se rompre sous les variations de positions sous des chocs ; souple dans son ensemble, le support 1 ne pourrait pénétrer directement dans les billons de bois. Aussi la méthode de bi-injection permet de réaliser, selon l'invention, une plaquette en une seule et même pièce en deux matières thermo-plastique différentes ; la technique de bi-injection permet précisément de fusionner les deux matières différentes pour ne former qu'une seule pièce ; la technique de bi-injection ou multi-injections permet ce résultat technique au moyen d'un moule d'injection aux combinaisons multiples et spécifiques d'injection, et de procédés d'injection à haute pression et à haute température de plusieurs matières différentes en un temps ouvert très court ; cette technique permet également d'obtenir des couleurs différentes composant la pièce injectée.

La plaquette est bien réalisée en une seule pièce unique avec des éléments différents tant dans les formes que dans les matières ; la nouvelle plaquette réalisée par bi-injection et réunissant ainsi des aptitudes différentes est de préférence composée de matières bio-dégradables.

De ce fait, ces deux supports intégrés ne formant qu'une seule et même pièce, c'est-à-dire la plaquette, sont composés de deux matières différentes, l'une concernant le support 6 dans une matière plastique à mémoire élastique, l'autre concernant le support 1 dans une matière plastique rigide, par une réalisation simultanée de moulage dans un seul moule. Afin de renforcer cette fusion des corps 1 et 6, le corps 6 a par ses formes et dimensions adaptées une partie inférieure située emprisonnée dans le corps 1, interdisant toute tentative d'arrachement frauduleuse ou non.

La RFID-UHF 2 est placée dans divers endroits du corps 6 qui peut avoir plusieurs quelconques formes adaptées mais préférentiellement en forme de tube, soit sous le bouchon 8 d'obturation du tube , soit lors des opérations de moulage à l'intérieur d'un logement 21 fermé, étanche et inviolable sauf destruction et donc preuve de fraude ; ce logement 21 capture la RFID-UHF qui la rend non-extractable et non-interchangeable. Le bouchon 8 permet la pose d'une RFID-UHF de type étiquette adhésive sur sa face interne inaccessible une fois le bouchon fermé par tout dispositif de blocage définitif adapté et étanche, par un opérateur en dernière minute sur le terrain. Dans son logement 21 la RFID-UHF doit en effet rester au sec pour garantir la permanence de sa lecture. La RFID-UHF peut aussi être éventuellement placée sur l'extérieur du support 6, pour des opérations internes et courtes de traçabilité, parfaitement contrôlées par ailleurs.

La plaquette dans sa partie 6 comprend un léger bourrelet 15 périphérique, destiné pour sa pose dans le bois, à permettre sa prise au moyen par serrage léger contre les parois d'un logement 20 interne d'un marteau adapté pour sa pose dans le bois.

Dans une 1ère variante de réalisation, le support extérieur 62 à mémoire élastique et de forme préférentiellement plate est placé à l'horizontale sur le coté 16 du corps 1 rigide et en position décalée inférieure au bord supérieur du même support 1 ; lors de l'enfoncement du corps 1 dans le bois 4 dans le sens 18 jusqu'à l'appui de sa face 19 interne contre la surface 20 du bois 4, le support 62 vient se relever dans le sens 17 et se positionner définitivement dans une position verticale à 90° du plan du bord supérieur du support 1, sous la contrainte de son contact en force et sans jeu contre le bois 4 ; la distance 3 de lecture de la RFID-UHF est ainsi obtenue et également maintenue de façon permanente.

Dans une 2ème variante, le support 63 a dans sa partie visible la forme d'un soufflet 30 fermé à plis 31 compressible, et est réalisé en une matière plastique à mémoire élastique ; le soufflet 30 se plie sous la contrainte de toutes pressions mécaniques qu'il reçoit dans le sens 32 et revient hors contraintes dans le sens inverse au sens 32 à sa position nominale éloignée du bois 4 autorisant une distance 3 de lecture d'une RFID-UHF 2 logée dans le soufflet 30. L'intégration d'une RFID-UHF, de même que dans la configuration initiale, est possible par des opérations internes et combinées rendues possibles dans la méthode de bi-injection utilisée.

Cette variante de réalisation convient particulièrement à son emploi sur les dés de palettes de manutention, exposés aux chocs frontaux exercés par les fourches des chariots-élévateurs. Une cavité 33 comprend un volume libre adapté pour recevoir le soufflet en position repliée et optimiser les distances 3 de lecture.

Dans une option alternative ou complémentaire , une RFID-UHF est placée et maintenue au centre d'un logement 34 central et interne du corps 1 rigide de la plaquette fixée en contact avec le bois, dans le but de placer la RFID-UHF à plusieurs distances 3 du matériau bois 4 selon plusieurs directions utiles à sa lecture ; cette option vient en complément ou en remplacement du dispositif avec soufflet 30 ; le logement 34 interne au dé en bois est particulièrement fermé et étanche garantissant la permanence de lecture de la RFID-UHF.

Les dés de palette comportent généralement un logement 35 pré-usiné dans lequel vient se fixer par contact à force le support 1 rigide et donc indéformable de la plaquette ; extraire la plaquette est impossible sauf à la détruire, ce qui serait une preuve de tentative de fraude, donc traçabilité contrôlée.

Dans une 3ème variante de fonction de la plaquette fixée sur un dé de palette en bois, la plaquette a deux corps intégrés ne faisant qu'un par procédé de bi-injection; le 1er corps 51 a une partie visible plaquée contre le bord extérieur du dé ; de ce fait, étant exposée, afin de résister aux chocs, elle est en matière à mémoire élastique.

La RFID-UHF est placée en toute sécurité à l'intérieur du 2^{ème} corps 54 central et rigide qui est lui-même enveloppé dans le 1^{er} corps 51 ; le logement interne du corps 54 central interne au dé en bois est particulièrement fermé et étanche à l'eau , et a des dimensions garantissant la mise à distance 3 du bois 4 et ainsi la permanence de lecture de la plaquette. le corps central 54 est en matière rigide et comprend des extensions en ergots 55 traversant le corps 51 afin de réaliser un blocage de la plaquette par contact piqué sur les parois 57 du logement 56 ;ce dispositif est nécessaire pour bloquer la plaquette fixée dans son logement 56 ;le blocage par le seul contact de la seule matière à mémoire élastique du corps 51 pourrait parfois être défaillant, la matière semi-souple autorisant la possibilités d'extraction de la plaquette, contrairement à un des buts recherchés ; la matière rigide composant les extensions 55 en ergots en matière rigide venant en appui direct par contact piqué contre les parois 57 du logement 56 assurent un blocage définitif de la plaquette dans l'élément en bois 4. Le corps 51 est donc à mémoire élastique, car en matière rigide, il présenterait trop de risques de casse aux chocs. La technique de bi-injection là aussi est requise pour valider une traçabilité sans fraude et sans possibilité de substitution et interchangeabilité des plaquettes. Le logement 56 est de préférence à forme de mortaise rectangulaire dans le but d'obtenir les distances 3 de lecture optimum en fonction d'une position centrale et axiale de la RFID-UHF plate. Ici le logement à mortaise rectangulaire permet d'ajuster le volume utile aux distances de lecture requises, plus finement que s'il était rond ; de plus le centrage de la plaquette lors de sa pose est de fait plus facile car orienté et garantit le bon positionnement des signes visibles placés sur la partie extérieure 52 du corps 51 ; ceci contrairement à un logement rond qui demanderait des dispositifs et attentions particulières en vue d'une pose centrée de la plaquette. Cette plaquette permet une face visible 52 de grande surface et recevant des signes d'informations complémentaires et nécessaires à d'autres traçabilités comme ceux requis par la norme NIMP15 par exemple ; la norme NIMP15, pour mémoire, est une norme internationale de protection phytosanitaire des frontières concernant les emballages en bois, dont les palettes, exigeant une forte traçabilité.

Le logement rectangulaire type mortaise renforce le dispositif dans son application au travers son aptitude à être réalisé par des outils de défonçage comme par exemple dits à chaîne, particulièrement adaptés sur une ligne de production industrielle de palettes de manutention. Cette 3^{ème} variante permet que le corps extérieur 51 plaqué sur la face extérieure en vis-à-vis du dé, ait une forme relativement épaisse ainsi qu'une grande surface pouvant donc recevoir de nombreux signes visibles d'informations utiles dans la reconnaissance et traçabilité des palettes ; ce corps 51 en matière à mémoire élastique, plaqué contre le dé, malgré son exposition frontale, pourra résister dans les meilleures conditions à de multiples et divers chocs ; même matraqué dans des conditions et longs usages extrêmes, il en resterait toujours un signe de reconnaissance visible de sa palette.

Tous autres divers signes ou éléments d'informations peuvent être posés sur toutes faces visibles ou non-visibles de la plaquette ainsi que dans toutes ses variantes.

Enfin, à ces dispositifs nouveaux matériels, s'ajoute un dispositif immatériel au travers un logiciel de lecture des RFID-UHF adaptés. Les RFID comportent par définition un numéro unique au monde ; les RFID-UHF utilisent une étendue de fréquences de 860 MHz à 960 MHz requises selon les pays par des normes et réglementations gérées et définies telles que par l'institution internationale EPC Global.

Le logiciel du lecteur est construit pour retenir un numéro de RFID transmis par le lecteur 5, numéro compris seulement dans l'étendue des fréquences de 860 MHz et 960 MHz ; cette étendue de fréquences 860-960 MHz est introduite dans le logiciel qui fera le tri dans toutes les fréquences données par le lecteur ; le logiciel élimine par défaut toutes les fréquences hors de l'étendue 860-960 MHz, ou d'une partie de cette étendue selon les zones d'exploitation, et par définition optimisera en partie la prise en compte et reconnaissance du numéro unique de la RFID-UHF de la plaquette visée.

L'invention s'applique à touts les types de RFID et dans toutes applications d'identification et de traçabilité similaires.

## Revendications

1. Plaquette de traçabilité des bois avec RFID-UHF, **caractérisée en ce qu'**elle est réalisée en une seule et même pièce par moulage en bi-injection plastique et composée de 2 matières différentes, l'une étant une matière plastique rigide indéformable composant le corps (1) inférieur de la plaquette fixé dans le bois, l'autre étant une matière plastique à mémoire élastique et composant le support (6) extérieur de capture et de mise de la RFID-UHF (2) à distance (3) du bois, ladite RFID-UHF (2) étant non-extractable de son support (6) et non-substituable, ledit support (6) extérieur étant préférentiellement transparent, lesdites matières plastique étant de préférence biodégradables.

2. Plaquette de traçabilité des bois avec RFID-UHF, selon les revendications R1, **caractérisée en ce que** le support (6) est réalisé en forme de tube destiné à recevoir la RFID-UHF (2), ledit tube recevant la RFID-UHF dans un ou plusieurs logements (21) intérieurs fermés et étanches.

3. Plaquette de traçabilité des bois avec RFID-UHF, selon les revendications 1 et 2, **caractérisée en ce que** le support (6) dans sa partie inférieure (7) a des formes et dimensions adaptées l'emprisonnant et l'intégrant définitivement au corps (1) de la plaquette.

4. Plaquette de traçabilité des bois avec RFID-UHF, selon les revendications 1, 2, et 3, **caractérisée en ce que** la position de la RFID-UHF (2) en fonction est mise à distance (3) du bois (4).

5. Plaquette de traçabilité des bois avec RFID-UHF, selon les revendications 1, 2, 3 et 4, **caractérisée en ce que** le support (62) à mémoire élastique est placé à l'horizontal sur le coté (16) du corps (1) et en une position décalée inférieure au bord supérieur du même support (1), pour que, lors de la pénétration du corps (1) rigide dans le bois (4), il se plie dans le sens (17) jusqu'à une position finale et verticale à 90° du plan supérieur du support (1).

6. Plaquette de traçabilité des bois avec RFID-UHF, selon les revendications 1, 2, 3 et 4, **caractérisée en ce que** le support (6) comprend un bourrelet (15) périphérique destiné à permettre la prise par un contact avec légère compression contre un logement (20) interne et adapté du marteau de pose de la plaquette lors de la prise de la plaquette par ce dernier.

7. Plaquette de traçabilité des bois avec RFID-UHF, selon les revendications 1, 2, 3, 4, et 6, **caractérisée en ce que** dans une variante appliquée sur dé de palette de manutention, le support (63) à mémoire élastique est un soufflet (30) à plis (31), fermé et compressible sous la contrainte de toutes pressions qu'il reçoit dans le sens (32), ledit soufflet (31) comprenant en son intérieur la RFID-UHF (2).

8. Plaquette de traçabilité des bois avec RFID-UHF, selon les revendications 1, 2, 3, 4 et 7, **caractérisée en ce que** la RFID-UHF est placée et maintenue au centre d'un logement (34) central de la plaquette fixée en contact avec le bois, dans le but de placer et maintenir la RFID-UHF (2) en fonction de lecture par sa mise à distance (3) du matériau bois (4).

9. Plaquette de traçabilité des bois avec RFID-UHF, selon les revendications 1, 2, 3, 4, 7, et 8, **caractérisée en ce que** dans une variante de réalisation en application sur dé de palette en bois (4), le corps (51) à mémoire élastique est fixé au dé en bois (4) dans le logement (56) en forme préférentiellement de mortaise rectangulaire et emprisonne en profondeur du dé un corps central (54) rigide comprenant en son intérieur la RFID-UHF (2), ledit corps central rigide (54) comprenant des extensions (55) latérales en ergots traversant et dépassant légèrement le corps (51) et destinées par contact piqué contre les parois (57) du logement (56) à bloquer la plaquette dans sa position de fonction, ledit corps (51) à mémoire élastique ayant une partie (52) extérieure plate et visible en contact du bord extérieur du dé.

10. Plaquette de traçabilité des bois avec RFID-UHF, selon l'une quelconque des revendications précédentes, **caractérisée en ce que** la RFID-UHF (2) intégrée à ladite plaquette visée, par l'élimination des fréquences étrangères à l'étendue des fréquences, travaille dans une plage de 860 MHz à 960 MHz.

## Claims

1. Insert for the traceability of wood with RFID-UHF, **characterised in that** it is produced in a single piece by plastic bi-injection moulding and composed of two different materials, one being a non-deformable rigid plastic material composing the lower body (1) of the insert fixed in the wood, the other being a plastic material with elastic memory and composing the external support (6) for capturing and placing the RFID-UHF reader (2) at a distance (3) from the wood, said RFID-UHF reader (2) being non-extractable from its support (6) and non-substitutable, said external support (6) preferentially being transparent, said plastic materials preferably being biodegradable.

2. Insert for the traceability of wood with RFID-UHF according to claim 1, **characterised in that** the support (6) is produced in the form of a tube intended to receive the RFID-UHF reader (2), said tube receiving the RFID-UHF reader in one or more closed and sealed internal recesses (21).

3. Insert for the traceability of wood with RFID-UHF according to claims 1 and 2, **characterised in that** the support (6) in its lower part (7) has forms and dimensions suited to trapping and integrating it definitively in the body (1) of the insert.

4. Insert for the traceability of wood with RFID-UHF according to claims 1, 2 and 3, **characterised in that** the position of the RFID-UHF reader (2) in operation is set at a distance (3) from the wood (4).

5. Insert for the traceability of wood with RFID-UHF according to claims 1, 2, 3 and 4, **characterised in that** the support (62) with elastic memory is placed horizontally on the side (16) of the body (1) and in an offset position lower than the top edge of the same support (1) so that, when the rigid body (1) penetrates the wood (4), it folds in the direction (17) to a final vertical position at 90° from the top plane of the support (1).

6. Insert for the traceability of wood with RFID-UHF according to claims 1, 2, 3 and 4, **characterised in that** the support (6) comprises a peripheral protrusion (15) intended to allow gripping by contact with slight compression against a suitable internal recess (20) on the hammer for fitting the insert when the insert is gripped by the latter.

7. Insert for the traceability of wood with RFID-UHF according to claims 1, 2, 3, 4 and 6, **characterised in that**, in a variant applied to the frame of a handling pallet, the support (63) with elastic memory is a bellows (30) with folds (31), closed and compressible under the force of any pressures that it receives in the direction (32), said bellows (31) comprising inside it the RFID-UHF reader (2).

8. Insert for the traceability of wood with RFID-UHF according to claims 1, 2, 3, 4 and 7, **characterised in that** the RFID-UHF reader is placed and held at the centre of a central recess (34) in the insert fixed in contact with the wood, for the purpose of placing and holding the RFID-UHF reader (2) in its reading function by placing it at a distance (3) from the wood material (4).

9. Insert for the traceability of wood with RFID-UHF according to claims 1, 2, 3, 4, 7 and 8, **characterised in that**, in a variant embodiment in application to the frame of a wooden pallet (4), the body (51) with elastic memory is fixed to the wooden frame (4) in the recess (56) preferentially in the form of a rectangular mortise and, in the depth of the frame, traps a rigid central body (54) comprising the RFID-UHF reader (2) inside it, said rigid central body (54) comprising lateral extensions (55) in through lugs slightly projecting beyond the body (51) and intended by pricked contact against the walls (57) of the housing (56) to lock the insert in its operating position, said body (51) with elastic memory having a flat visible external part (52) in contact with the external edge of the frame.

10. Insert for the traceability of wood with RFID-UHF according to any one of the preceding claims, **characterised in that** the RFID-UHF reader (2) integrated in said insert referred to, by the elimination of frequencies foreign to the extent of the frequencies, works in a range from 860 MHz to 960 MHz.

## Patentansprüche

1. Platte zur Rückverfolgbarkeit von Holz mit RFID-UHF, **dadurch gekennzeichnet, dass** sie aus einem einzigen und gleichen Stück durch Formung aus Plastik-Zweikomponenten-Spritzguss hergestellt und zusammengesetzt ist aus 2 verschiedenen Materialien, wobei das eine ein nichtverformbares starres Plastikmaterial ist, das den unteren Körper (1) der Platte, die im Holz befestigt ist, zusammensetzt, das andere ein Plastikmaterial mit einem elastischen Gedächtnis ist und die äußere Stütze (6) zur Aufnahme und Beabstandung (3) der RFID-UHF (2) vom Holz zusammengesetzt, wobei die RFID-UHF (2) nicht aus ihrer Stütze (6) extrahiert und nicht ersetzbar werden kann, wobei die äußere Stütze (6) vorzugsweise transparent ist, wobei die Plastikmaterialien vorzugsweise biologisch abbaubar sind.

2. Platte zur Rückverfolgbarkeit von Holz mit RFID-UHF nach Anspruch 1, **dadurch gekennzeichnet, dass** die Stütze (6) in Form eines Rohrs durchgeführt ist, das dazu ausgelegt ist, die RFID-UHF (2) aufzunehmen, wobei das Rohr die RFID-UHF in einem oder mehreren inneren geschlossenen und dichten Lagern (21) aufnimmt.

3. Platte zur Rückverfolgbarkeit von Holz mit RFID-UHF nach Anspruch 1 und 2, **dadurch gekennzeichnet, dass** die Stütze (6) in ihrem unteren Teil (7) Formen und Abmessungen aufweist, die dazu ausgelegt sind, sie endgültig in den Körper (1) der Platte einzuschließen und zu integrieren.

4. Platte zur Rückverfolgbarkeit von Holz mit RFID-UHF nach Anspruch 1, 2 und 3, **dadurch gekennzeichnet, dass** die Position der RFID-UHF (2) vom Holz (4) beabstandet (3) ist.

5. Platte zur Rückverfolgbarkeit von Holz mit RFID-UHF nach Anspruch 1, 2, 3 und 4, **dadurch gekennzeichnet, dass** die Stütze (62) mit einem elastischen Gedächtnis horizontal auf der Seite (16) des Körpers (1) und in einer versetzten unteren Position am oberen Rand der gleichen Stütze (1) angebracht ist, damit sie sich beim Eindringen des starren Körpers (1) in das Holz (4) in der Richtung (17) bis zu einer End- und vertikalen Position 90° zum oberen Rand der Stütze (1) biegt.

6. Platte zur Rückverfolgbarkeit von Holz mit RFID-UHF nach Anspruch 1, 2, 3 und 4, **dadurch gekennzeichnet, dass** die Stütze (6) einen peripheren Wulst (15) umfasst, der dazu vorgesehen ist, den Eingriff durch einen Kontakt mit einer geringfügigen Kompression gegen ein internes Lager (20) zu ermöglichen und vom Hammer zur Anbringung der Platte beim Eingreifen der Platte auf Letzterem dazu ausgelegt ist.

7. Platte zur Rückverfolgbarkeit von Holz mit RFID-UHF nach Anspruch 1, 2, 3, 4 und 6, **dadurch gekennzeichnet, dass** in einer Variante, die auf dem Sockelschaft der Transportpalette angebracht ist, die Stütze (63) mit elastischem Gedächtnis ein Balg (30) mit Falten (31) ist, geschlossen und unter der Spannung aller Drücke, die sie in der Richtung (32) aufnimmt, komprimierbar, wobei der Balg (31) in seinem Inneren die RFID-UHF (2) umfasst.

8. Platte zur Rückverfolgbarkeit von Holz mit RFID-UHF nach Anspruch 1, 2, 3, 4 und 7, **dadurch gekennzeichnet, dass** die RFID-UHF in der Mitte eines zentralen Lagers (34) der festen Platte, befestigt in Kontakt mit dem Holz, angebracht ist und gehalten wird, mit dem Ziel, die RFID-UHF (2) durch ihre Beabstandung (3) vom Holzmaterial (4) in der Lektürefunktion zu halten.

9. Platte zur Rückverfolgbarkeit von Holz mit RFID-UHF nach Anspruch 1, 2, 3, 4, 7 und 8, **dadurch gekennzeichnet, dass** in einer Ausführungsvariante, angebracht auf dem Sockelschaft der Holzpalette (4), der Körper (51) mit elastischem Gedächtnis auf den Sockelschaft aus Holz (4) im Lager (56) vorzugsweise in Form einer rechtwinkligen Einkerbung befestigt ist und in der Tiefe des Sockelschafts einen starren zentralen Körper (54) einschließt, der in seinem Inneren die RFID-UHF (2) umfasst, wobei der starre zentrale Körper (54) seitliche Verlängerungen (55) als Nocken umfasst, die den Körper (51) durchqueren und geringfügig überragen und durch angehefteten Kontakt gegen die Wände (57) des Lagers (56) dazu ausgelegt ist, die Platte in ihrer Funktionsposition zu blockieren, wobei der Körper (51) mit elastischem Gedächtnis einen flachen und sichtbaren äußeren Teil (52) in Kontakt mit dem äußeren Rand des Sockelschafts aufweist.

10. Platte zur Rückverfolgbarkeit von Holz mit RFID-UHF nach einem der vorhergehenden Ansprüche, **dadurch gekennzeichnet, dass** die RFID-UHF (2), die in der bestimmten Platte integriert ist, durch die Eliminierung der fremden Frequenzen aus dem Frequenzbereich in einem Bereich von 860 MHz bis 960 MHz arbeitet.
